# EUROPEAN PATENT SPECIFICATION

(11) **EP 3 603 902 B1**
(45) Date of publication and mention of the grant of the patent: **28.06.2023**
(21) Application number: 18187125.2
(22) Date of filing: 02.08.2018
(51) Int. Cl.: B25J 9/16, G05B 19/042, G05B 23/02, G05B 19/05, G06F 3/01

(54) **METHOD FOR BUILDING AND/OR MAINTAINING AN INDUSTRIAL MACHINE**
VERFAHREN ZUR KONSTRUKTION UND/ODER WARTUNG EINER INDUSTRIELLEN MASCHINE
PROCÉDÉ POUR CONSTRUIRE ET/OU ENTRETENIR UNE MACHINE INDUSTRIELLE

(43) Date of publication of application: 05.02.2020
(73) Proprietor: Schneider Electric Industries SAS, 92500 Rueil-Malmaison (FR)
(72) Inventor: Stefan, Iulia D., 97828 Marktheidenfeld (DE); Platzer, Christian, 97072 Würzburg (DE)
(74) Representative: Manitz Finsterwald Patent- und Rechtsanwaltspartnerschaft mbB

(56) References cited:
- EP-A1- 2 927 854
- EP-A1- 3 229 175
- US-A1- 2009 110 289
- US-A1- 2014 183 254
- US-A1- 2016 299 496
- US-A1- 2017 357 233

## Description

The present invention relates to a method for maintaining an industrial machine. The machine comprises a plurality of machine components, wherein the industrial machine is controlled by a machine application, i.e. a software and/or firmware.

A method in accordance with the preamble of claim 1 is disclosed in EP 3 229 175 A1 and US 2017/0357233 A1. EP 2 927 854 A1 teaches a mobile electronic device which performs an analysis on images and videos of an industrial device in order to identify e.g. a model and device number printed on the device.

Industrial machines are used in a great variety of applications. For example, such industrial machines can be used to produce goods, slice and package food products or to sort and transport packages in an automated manner. In order to provide this functionality, industrial machines comprise of a plurality of machine components such as servo drives, sensors, other actors and/or controllers such as programmable logic controllers (PLCs).

When an industrial machine is built, a worker building the machine usually refers to a plan or schematic of the industrial machine in order to place the correct machine components at the correct positions within the industrial machine. Also, an electric plan is used to correctly connect e.g. electric supply cables to the correct input/output ports (I/O-ports) of a controller. Only if all connections and machine components have been set up correctly, a correct function of the industrial machine can be provided.

Due to the complex nature of such industrial machines, it may occur that during the building process (and even in maintenance processes) e.g. an electric wiring of the industrial machine is not set up correctly or that e.g. two similar drives are erroneously swapped.

Since such industrial machines can have a very large number of machine components and an even higher number of electric or mechanic connections, it is then difficult and time-consuming to locate the wrong electric or mechanic connection and/or the erroneously placed machine components. Also, it is disadvantageous that a worker setting up the machine has to be very thorough in confirming the correct placement and electrical or mechanical connection of each of the machine components. This is also time-consuming and slows down the setup process of the industrial machine.

It is therefore an object of the present invention, to provide a method for building and/or maintaining an industrial machine that allows for an easier and/or faster building and/or setup process and/or maintenance process of the industrial machine.

This object is solved by a method in accordance with claim 1.

In accordance with the invention, a method for maintaining an industrial machine is disclosed. The industrial machine comprises a plurality of machine components. The machine is controlled by a machine application (e.g. a firmware and/or software). The method comprises the step that a vision system identifies the states of the machine components. Then, an assistant system compares the identified states to expected states of the machine components. Next, preferably in case a deviation (or mismatch) of the identified state from the expected state of at least one machine component is detected, then the machine application is advantageously modified by the assistant system, preferably automatically, based on the deviating identified state.

In other words, according to the invention, the vision system detects the state of a machine component, i.e. the position of the machine component and/or the electrical connections of the machine component. The identified state of the machine component is then compared to e.g. an electronically or digitally stored plan (i.e. the electronic plan) of the industrial machine. As an example, it can then be determined that the mechanical position of the machine component is correct but, however, the electric connections are connected to an I/O-port of a controller that is different from the I/O-port defined in the electronic plan of the industrial machine. In order to rectify this deviation (or mismatch) from the expected state (i.e. from the electronic plan) the assistant system then, preferably automatically, modifies e.g. software (i.e. the machine application) of a controller such that control commands for the machine component are sent to the I/O-port to which the machine component is actually connected to.

The invention thus allows taking into account deviations from the industrial machine as planned (i.e. deviations from the expected state) which can be rectified "on the fly" during a building and/or maintenance process of the industrial machine. Thereby, a time-consuming search for the location of an error or deviation can be omitted. In addition, the building and/or maintenance process is facilitated.

In the following, further details of the inventive method are described.

Advantageously, the method is performed when new machine components are added to the industrial machine and/or if machine components are substituted during maintenance processes. The method can e.g. be repeated every time a machine component is added, removed and/or substituted.

A machine component preferably is any entity that is part of the complete and working industrial machine. A machine component can be an electric cable, an actor, a drive, a controller, a PLC, a sensor, etc. Alternatively or additionally, a machine component could also be any entity that can be separately detected by the vision system and/or the assistant system.

For example, the vision system may detect markings that are typically placed on components (e.g. type plates, cable markings, connector markings, labels put on I/O modules, color coding for wires) or in case this is not enough for the machine assistant, specific additional markings (labels, QR codes, etc.) can be placed on components in order to facilitate the operation of the invention.

Similarly, digital information may be used that is available anyway (electronic type plates, diagnostics data, device addressing information, etc.) or specific additional digital information can be detected (e.g. via OPC-UA - OPC Unified Architecture), e.g. by a discovery system as described later.

Preferably, the machine application is a firmware and/or software that is controlling the operation of the industrial machine. The machine application may be distributed over different machine components, e.g. distributed over different controllers of the industrial machine.

The vision system can identify the states of the machine components preferably based at least on an optical recognition, as will be detailed later below. Nonetheless, the vision system can comprise any sensor that allows the vision system to detect and to identify a machine component. The sensor can thus be a standard digital camera, a laser scanner, a TOF-camera, a stereo-camera, a radar or lidar-device, an ultrasound scanner and the like.

It is possible that the vision system (comprising e.g. an image sensor and image processing unit) is not a part of the industrial machine. For example the vision system could use the built-in camera of a worker's mobile phone. Or it could use web-cams that are permanently installed in the production facility where the industrial machine is assembled.

Particularly, the state of a respective machine component can be identified when a worker assembles a machine component and/or attaches the machine component to the industrial machine.

The identified state of the machine component is the state of the machine component as detected by the vision system and/or as detected by further means (e.g. network topology, diagnostics data, electronic type plates). In contrast, the expected state of a respective machine component is the state of the machine component as defined in e.g. the electronic plan of the industrial machine. The electronic plan, e.g. the mechanical and/or electrical plan, can be stored in the assistant system. Alternatively or additionally, the electronic plan can be stored in the industrial machine itself (e.g. on a PLC or industrial PC, or any other component with digital connectivity that is part of the machine) and/or in the cloud and/or on a local server.

The modification of the machine application is based on the deviation of the identified state. This means that the machine application is preferably modified such that the correct function of the industrial machine is assured despite the identified deviation. For this purpose, the machine application may be obtained either from compiled code running on the PLC or from source code available to the assistant system. As explained in more detail below, a worker can be required to accept or reject the modification.

Advantageously, the assistant system is connected to at least one controller of the industrial machine via a data connection, wherein the controller executes at least a part of the machine application. The data connection between the assistant system and the at least one controller can be used to transmit the modifications that are necessary to the machine application in case the assistant system detects a deviation between the identified state and the expected state. The data connection can e.g. comprise an Ethernet connection and/or a fieldbus connection, e.g. Sercos III, Profibus or Profinet. The assistant system can be executed by a separate computing unit, e.g. a personal computer or a programmable logic controller (PLC) or an Industrial PC (iPC) or on a server or in the cloud.

Alternatively or additionally, the assistant system can also be executed at least in part by the industrial machine itself. In other words, the assistant system can run on at least one of the controllers of the industrial machine.

Preferably, the vision system is a part of the assistant system.

Further preferably, the vision system comprises at least one camera, wherein the camera repeatedly provides images of the industrial machine to the assistant system. The camera can be a standard optical digital camera. In addition, the vision system can also comprise a time of flight (TOF-)camera, a stereo camera or any other 3D-recognition means in order to allow a better 3D recognition of the machine components. The vision system can also comprise multiple cameras arranged separately and spaced apart from each other. The cameras can be fixedly mounted, wherein the industrial machine or the building area of the industrial machine can be at least partly covered by the field of view of the cameras.

Advantageously, at least one camera is movable relative to the industrial machine, wherein the movable camera is preferably carried by a worker. The movable camera can e.g. be fastened to a helmet or a shoulder of the worker. This bears the advantage that the movable camera will always see the machine components the worker is working on. Thereby, it is facilitated to identify the state of the respective machine component. Alternatively, the movable camera can be attached to a, preferably autonomous, vehicle. The vehicle can be an automatically flying drone or a ground-based vehicle. The vehicle may comprise a moving robotic arm at which the moving camera is attached. The robotic arm can then move the camera such that the camera can inspect the industrial machine and can identify the states of the machine components. Particularly, the vehicle and/or the robotic arm can be controlled by the assistant system such that the identified states of the machine components are preferably updated from time to time. Also, the robotic arm can be used to remove covers, doors and/or flaps of the industrial machine in order to allow the camera to see machine components that are usually hidden behind.

Further advantageously, a position tracking system is provided that is used to track the position of the moving camera. If the moving camera is e.g. mounted to the helmet of a worker, the position tracking system can then provide the assistant system with information necessary to establish where the worker is currently situated and which machine components the worker is working on. The position tracking system can also be adapted to detect the direction in which the camera is looking. Such a tracking allows linking the information gathered by the movable camera to the position and direction of the camera. The assistant system can thus generate a 3D representation of the industrial machine, wherein the 3D representation may be compared to an electronic plan (i.e. to the electrical and/or mechanical plan) of the industrial machine, as discussed later.

Furthermore, to e.g. facilitate the generation of the 3D representation of the industrial machine, anchor points (e.g. RFID beacons - Radio Frequency Identification beacons) and/or markings on the industrial machine can be used to detect the position of the movable camera. The anchor points and/or markings can be machine readable.

Alternatively, the position and/or orientation of the machine component can be established by the vision system (e.g. by detecting the rough geometry of the machine component itself), either as the only means of identifying the orientation, or to get rough data of the orientation of the machine component in space and then use the aforementioned tracking system to detect a more exact orientation.

It is preferred if the vision system allows for a real-time detection of the identified states of the machine components. Due to the real-time detection, it is possible to immediately notify the worker of possible deviations from the expected states.

Further preferably, the vision system and/or the assistant system employ an artificial intelligence, preferably a neural network, to detect the states of the machine components. For example, within the artificial intelligence e.g. "YOLO9000" ("you look only once" - introduced by Joseph Redmony) can be used, which performs a real-time object detection of over 9000 different objects, wherein only a single image is preferably used for object detection.

It is particularly useful to use such an artificial intelligence, as the artificial intelligence facilitates the recognition of the machine components and the recognition of the identified state of the respective machine component. For that purpose, the artificial intelligence can be trained using images of the image components from different viewing angles. Also the artificial intelligence can be trained for recognizing numbers, letters and/or type plates. The training may comprise a supervised learning process.

In other words, the artificial intelligence can be capable of performing OCR, optical character recognition. Thus, it is possible to recognize the writing on a type plate of a motor, drive, sensor and/or PLC unit. Also, OCR can be used to detect cables and/or cable markings to identify the electrical connections of a machine component. A cable marking can comprise an identification plate arranged at the electric cable.

For example, a cable marking can be detected that identifies a specific cable as belonging to a drive A. It can further be detected using OCR that the cable from the drive A is connected to an I/O-port #5. The identified state of the machine component drive A then comprises an electrical connection to the I/O-port #5. In case the expected state would rather be an electrical connection to the I/O-port #3, then the assistant system will modify the machine application such that control commands or a power control for drive A is outputted not at I/O-port #3 but at I/O-port #5 instead. Also, prior to modifying the machine application, the assistant system may notify a worker of this detected mismatch - and will propose corrective measures to take. Either, assuming that the electronic plan is the desired state, to guide the worker through the process of re-wiring the cable to the correct I/O-port #5, or, assuming that the actual situation is desired, to modify the electronic plan (including the machine application) such that I/O-port #3 is used for controlling that drive. In general, the machine assistant can be adapted to guide a worker through a process of correcting the deviation.

As another example, by detecting identical markings on both ends of a cable the assistant system can infer which two machine components are connected by the cable (e.g. drive A and motor B). The system can then compare this identified state of the cable with the electronic plan which indicates which components should be connected by the cable according to the electronic plan.

Alternatively or additionally, the machine components and/or their cables can comprise a machine-readable marking, e.g. a barcode or QR-code. The machine-readable code allows an easier detection of the respective machine component and/or its electrical connections.

According to the invention, the assistant system performs a discovery process over a data network to detect machine components. During the discovery process a readout of information about the machine component, its ID (Identification), its type and so forth can be performed. The data network comprises an Ethernet connection and/or a field bus connection. The assistant system can preferably use different network protocols to discover/detect machine components which are so-called "data connected" components. Due to the discovery process in addition to the use of the vision system the invention identifies the states of "hidden" machine components that cannot easily be discovered by the vision system. The state of a "hidden" machine component can comprise the state of purely logical connections (e.g. fieldbus addresses, logical assignment of devices, IP addresses) which have an effect in the same way that wiring has, but which are not visible on optical inspection of the cabling. Also, it is possible to use the discovery process to confirm the visual detection. For example, a modification by the assistant system can only be performed if the discovery process confirms the visually identified state of a machine component. Particularly, it is possible to provide the artificial intelligence with the data obtained during the discovery process or for purely checking the correct assignment and addressing of data connected devices.

The discovery process can be performed by a discovery system which may be part of the assistant system. The discovery process can be repeated within predetermined time intervals to e.g. detect a new firmware in one of the machine components. The state or identified state of that machine component can then be updated to reflect the new firmware.

Advantageously, the identified state of a respective machine component comprises at least one of
- a position of the machine component,
- a mechanical connection of the machine component,
- an electrical connection of the machine component,
- an orientation of the machine component,
- a type of the machine component and
- a network address of the machine component.

Also, any further information obtained on the machine component can be comprised in the identified state.

The position of the machine component can comprise the 2D or 3D position within the industrial machine. The (mechanical) position of the machine component can be used to infer the mechanical connections of the machine component. The mechanical connection can indicate to which other component(s) or mechanical elements the respective machine component is attached to. The electrical connection can indicate to what the machine component is electrically connected to. For determining the electrical connection it may be necessary to identify the connected cables, as described above. The orientation of the machine component can indicate an orientation in 2D and/or 3D space. The type of a machine component can e.g. indicate the type of a motor, drive, the type of a sensor or PLC, etc., wherein the type can e.g. be determined via the discovery process and/or recognition of the machine component itself and/or OCR of its type plate.

Advantageously, the assistant system can provide different levels of how strict a machine component has to match the electronic plan. For example, if a motor type does not have the expected type (e.g. part number), but otherwise still acts as a link between a drive and a mechanics according to the functionality expected by the electronic plan, then this mismatch might be acceptable (either configured as such at the time when originally setting up the system, or accepted by a worker when the assistant system first detected the mismatch).

The identified state of each machine component is preferably stored in the assistant system. After storing the identified state, the identified state can be compared with the expected state. The result of the comparison can then necessitate a modification of the machine application.

Preferably, the worker is prompted for approval before the machine application is modified. Apart from this, all steps of the method can be performed automatically by the assistant system.

For example, the assistant system could inform the worker (e.g. via a human machine interface, for example a handheld computer) that the deviation X has been detected for the drive A and that the machine application will be modified by means of Z to take care of the detected state. The assistant system can also propose different ways to rectify the deviation (e.g. modification of the machine application or rewiring), wherein the worker can then decide among the different ways. The planned modification can also be shown to the worker in more detail. After decision and/or approval of the worker, the modification can be performed automatically.

The assistant system can also prompt the worker to confirm which machine component has been added and/or connected. Only after this confirmation of the worker, a modification of the machine application can be performed.

Alternatively or additionally, the worker is prompted for approval after the machine application is modified. For example, the modifications of the machine application can be performed automatically and are then retroactively approved by the worker. The worker could then approve all modifications in a bulk, preferably without being interrupted in the building process.

Preferably, the assistant system notifies the worker of a non-rectifiable deviation, for example, if a servo drive which is not sufficiently powerful for a specific task is mounted at a position of that specific task, then even a modification of the machine application cannot guarantee a correct function of the industrial machine. The worker can then be required to correct his error. In other words, a non-rectifiable deviation is a deviation that cannot be rectified by modifying the machine application.

Advantageously, the expected states of the machine components are retrieved from an electronic plan of the industrial machine, preferably from a CAD-file and/or a file containing information about the planned electrical connections within the industrial machine. For example, the information about the planned electrical connections can be in the EPLAN-format.

Further preferably, the modification of the machine application comprises re-mapping of a network address of the respective machine component and/or re-mapping of an electrical interface to which the respective machine component is connected (e.g. re-mapping of I/O assignment). In an exemplary case, a data connected machine component, e.g. a drive that is controlled via a fieldbus interface, has been swapped with a mechanically identical component. However, the two mechanically identical components comprise two different network addresses. In order to rectify this deviation, the machine application is then modified such that the network addresses of the two components are also swapped within the machine application. Thereby, a correct functioning of the two components is provided. Similarly, as already explained above, the erroneous connection of the electric cables of a machine component to the wrong I/O-port (i.e. the electrical interface) can be resolved by modifying the machine application such that electric control voltages are outputted at the other electrical interface, instead.

In practice it is thus possible for a worker building the industrial machine to simply use (almost) anyone of identical machine components during the setup of the industrial machine. If e.g. three mechanically identical servo drives are required, wherein one servo drive is used to power a drill, the second servo drive is used for a cutting knife and the third servo drive should be used for a conveyor belt, it then has no consequences if e.g. the servo drive that was initially predetermined to be used for the drill is then used for the transportation belt. In this case, the vision system would identify the state of the first servo drive as mechanically connected to the transportation belt. This would then be determined as a deviation from the expected state (connection to the drill), wherein the deviation is then rectified by modifying the machine application.

A worker can thus simply use anyone of identical machine components as exchangeable parts and can also e.g. electrically connect the machine components at anyone of similar I/O-ports as any deviation from the electronic plan can be rectified automatically by the assistant system.

Preferably, the machine application can comprise a lookup table (LUT) in which e.g. the current network address and/or the currently used electrical interface is listed. In case a deviation from the expected state is detected, then the assistant system only needs to modify the contents of the lookup table. This bears the advantage that e.g. a source code or a compiled code of the machine application is not required to be modified. Thereby, the modification of the machine application can be performed without requiring much effort.

Alternatively or additionally, it is also possible to modify a source code or compiled code (executable) of the machine application. Also, it is possible to load libraries (e.g. dynamic link libraries, DLLs) into the machine application that comprise the necessary modification of the machine application.

Advantageously, a virtual plan of the industrial machine in its actual/true state is generated, e.g. by the assistant system, based on the identified states of the machine components, wherein the virtual plan is updated when a new state of a machine component is identified. The virtual plan can thus accurately reflect the actual state of the industrial machine. The virtual plan e.g. provides detailed information about the position of a machine component within a control cabinet. The virtual plan can e.g. be outputted in case of a machine failure to facilitate the identification of the error. Also, in case of required maintenance, the virtual plan can show the exact location of a component that has to be accessed. A time consuming search for the respective machine component, e.g. years after the setup of the industrial machine, when a worker is not aware of the exact position in which a specific machine component was placed, can thus be omitted. In addition, the invention also rectifies the problem that electronic plans tend to be no longer updated for changes after a certain point in the development process and therefore tend to become unreliable in so far that they no longer accurately depict the latest state of the planning and decision making process.

Furthermore, the assistant system can be adapted to identify the machine component that triggered the failure of the industrial machine. This can be performed e.g. by detecting a non-responding machine component or a machine component that draws a too high electric (blocking) current or a too low electric current, as compared to an expected current. The assistant system can then highlight the respective machine component in the virtual plan so as to allow a worker to easily find and repair the respective machine component. The virtual plan can be shown on a human machine interface, e.g. on a handheld computer.

Advantageously, an augmented reality module of the assistant system is used to show a worker where a respective machine component is placed, should be placed and/or should be connected. The augmented reality module can e.g. comprise augmented reality glasses that lead the worker to the respective machine component or indicate where the respective machine component should be placed. Also, it is possible that the augmented reality module uses a camera of e.g. a mobile phone, wherein a life feed from the camera of the mobile phone is overlaid with information leading the worker to the respective machine component.

In summary, during a building or maintenance process, the worker will add a new machine component or replace a machine component of the industrial machine. The new or replaced machine component and e.g. its position, orientation, mechanical and/or electrical connections will be viewed by a camera of the vision system. The camera can then produce picture and/or video data that is transferred to an artificial intelligence unit of the assistant system. The artificial intelligence unit can previously be trained based on a database that holds e.g. descriptions of possible machine components. Once the artificial intelligence unit has recognized the new or replaced machine component, i.e. identified the machine component and has further identified its state, then the recognized machine component and its identified state is added to the virtual plan. A comparator unit of the assistant system can then compare the virtual plan with mechanical and/or electrical plans of the industrial machine. Before the comparison, a converter unit of the assistant system can convert the mechanical and/or electrical plans (or electronic plans, as also used herein) into the same data format as the virtual plan, e.g. in an XML-format (extensible markup language).

The comparator unit can then identify deviations or mismatches between the electronic plans (i.e. the expected state) and the virtual plan (i.e. the identified state) of the machine component. If a deviation is present, the worker can be notified. Additionally, the deviation can be logged in a logging file.

A correction unit of the assistant system can then perform a correction of the deviation by modifying the machine application.

Finally, the virtual plan and a logical plan can be updated with the current state of the industrial machine. The logical plan can preferably comprise information about the electrical connections of the respective machine components. Electrical connections can comprise data connections.

It is to be understood that also a removal of a machine component from the industrial machine can be identified using the vision system. The identified state of that machine component can then be set to "missing". Also, the removal of the machine component can then be reflected in the virtual plan of the industrial machine.

The invention further relates to an assistant system as claimed in claim 12.

Furthermore, the invention also relates to a system comprising of an assistant system and an industrial machine, as both described herein. The industrial machine and the assistant system are coupled via a data connection. The industrial machine preferably is a slicer, e.g. for food products, a packaging machine or the like.

Finally, the disclosure also relates to a further method for building and/or maintaining an industrial machine. The industrial machine comprises a plurality of machine components. The machine is controlled by a machine application (e.g. a firmware and/or software). The method comprises the step that a discovery system identifies the states of the machine components. Then, an assistant system compares the identified states to expected states of the machine components. Next, preferably in case a deviation (or mismatch) of the identified state from the expected state of at least one machine component is detected, then the machine application is advantageously modified by the assistant system, preferably automatically, based on the deviating identified state.

In other words, the further method uses a discovery system instead of the vision system. The discovery system can, as described above, perform a readout of information about the machine component, its ID (Identification), its type and so forth, preferably via a data network. The data network can comprise an Ethernet connection and/or a field bus connection. The state of a machine component identified by the discovery system can comprise the state of purely logical connections (e.g. fieldbus addresses, logical assignment of devices, IP addresses).

It is to be understood that the discovery system and the vision system can be used in parallel, i.e. both the discovery system and the vision system may be a part of the assistant system. In General, data connections via the data network are used to detect the actual state of digitally connected devices (i.e. machine components), whereas the vision system may be used to detect the actual state of mechanical and non-data electric connections (like power or I/O).

The invention also relates to a system as disclosed above, wherein the vision system is replaced or complemented by the discovery system.

The above description of the inventive method also applies correspondingly to the inventive assistant system, the inventive system and the further inventive method.

The invention is now further described with respect to exemplary embodiments as shown in the figures.
- Fig. 1: shows a schematic view of an industrial machine, wherein a worker is adding a component to the industrial machine;
- Fig. 2: shows a terminal panel of the industrial machine.

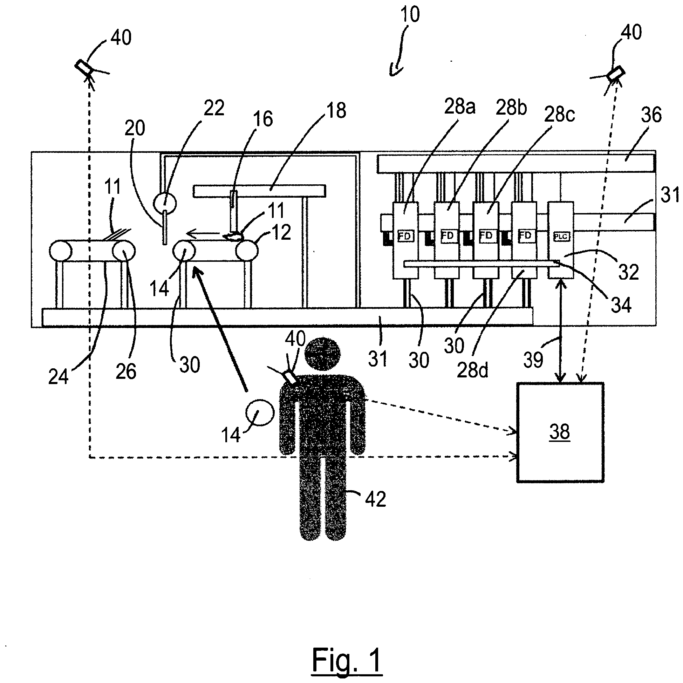

Fig. 1 shows an industrial machine 10. The industrial machine 10 is adapted for slicing a work product 11.

The industrial machine 10 comprises a first conveyor 12 that is actuated by a first motor 14. The work product 11 is placed onto the first conveyor 12 by a feeder 16. The feeder 16 is operated by a linear motor 18. The first conveyor 12 transports the work product 11 towards a cutter 20, wherein the cutter 20 is actuated by a second motor 22.

After the cutter 20 has sliced the work product 11 into several slices, the slices are placed on a second conveyor 24. The second conveyor 24 comprises a weight sensor 26 for determining the mass of the sliced work product 11. The second conveyor 24 then transports the sliced work product 11 to a packaging machine (not shown).

The motors 14, 18, 22 and the weight sensor 26 are operated by a first, second, third and fourth field device 28a, 28b, 28c, 28d. A respective field device 28 is connected to the motors 14, 18, 22 and the sensor 26 via electrical cables 30.

In turn, the field devices 28 are controlled by a PLC (programmable logic controller) 32, wherein the PLC 32 is in connection with the field devices 28 by means of a digital communication bus 34 (i.e. a data network). The digital communication bus 34 can be a field bus, e.g. a SERCOS III bus. The digital bus 34 can e.g. be used to perform a discovery process to detect machine components connected to the digital bus 34.

The industrial machine 10 can further comprise a power supply 36 which supplies the field devices 28, the PLC 32, the motors 14, 18, 22 and the sensor 26, etc. with electrical energy.

The power supply 36 and all entities mentioned to be supplied by the power supply 36 can be considered machine components of the industrial machine 10. Also, all entities necessary for the industrial machine 10 (e.g. carriers, cables, doors, conveyors, etc.) can be considered machine components of the industrial machine 10.

The industrial machine 10 and in particular the PLC 32 can be connected to an assistant system 38 via a data connection 39. The assistant system 38 can also (at least partly) be included or integrated in the PLC 32.

The assistant system 38 comprises three cameras 40 wherein one camera 40 is carried by a worker 42. The field of view of the cameras 40 comprises a view of the industrial machine 10 from different angles, wherein the camera 40 carried by the worker 42 is arranged such that the camera 40 can see what the worker 42 is performing with his hands. The images captured by the cameras 40 are transmitted electronically to the assistant system 38.

During the building of the industrial machine 10 the worker 42 can be tasked to attach the first motor 14 at the first conveyor 12. This task is monitored by the cameras 40 and checked for correctness by the assistant system 38, as will be described in more detail later. During the attachment of the first motor 14 to the industrial machine 10, electrical cables 30 of the first motor 14 have to be connected to I/O-ports of the field devices 28. For that purpose, the worker 42 can arrange the cables 30 in cable channels 31.

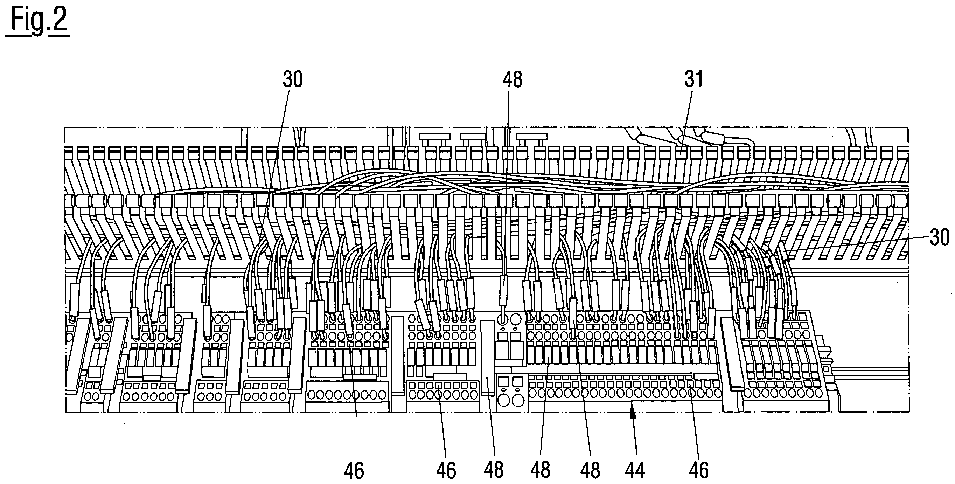

An example of a cable channel 31 and a terminal panel 44 is shown in Fig. 2. The terminal panel 44 is arranged adjacent the cable channel 31. The terminal panel 44 is electrically connected to I/O-ports of the field devices 28. The terminal panel 44 comprises a plurality of electrical terminals 46 wherein the electrical cables 30 are connected to the electrical terminal 46.

As shown in Fig. 2, each of the electrical cables 30 can comprise near its end an identification plate 48 that indicates to which actor or sensor the electrical cable 30 is connected. Also, the terminal panel 44 comprises identification plates 48 that allow identifying which electrical terminal 46 belongs to which I/O-port of which field device 28.

In case the worker 42 is mounting or attaching the first motor 14 to the industrial machine 10, the camera 40 carried by the worker 42 can e.g. see a type plate (not shown) of the first motor 14 and thus can identify the type of the first motor 14. When the worker has attached the first motor 14 at the industrial machine 10, the position and orientation in which the first motor 14 has been attached, can be detected by the cameras 40. If the worker then connects the cables 30 of the first motor 14 into electrical terminals 46 of the terminal panel 44, the cameras 40 can again identify (e.g. via the identification plates 48) to which electrical terminals 46 the worker 42 has connected the cables 30 of the first motor 14. This is performed by the assistant system 38. Thus, the assistant system 38 identifies the state of the first motor 14, wherein the identified state of the first motor 14 comprises the actual type of the first motor 14, the position and orientation of the first motor 14 and the electrical connections (i.e. the electrical terminals 46) of the first motor 14. The assistant system 38 then compares the identified state of the first motor 14 to an expected state, wherein the expected state is taken from a digital plan of the industrial machine 10. It is then e.g. detected that the first motor 14 was erroneously not connected to the first conveyor 12 but to the cutter 20, instead. The assistant system 38 can then inform the PLC 32 accordingly, wherein the assistant system 38 modifies a machine application running on the PLC 32 in order to reroute command signals such that the command signals for the cutter are then transmitted to the first motor 14 (e.g. by re-mapping network addresses, as described above).

Alternatively, the worker 42 could e.g. erroneously connect the electrical cables 30 of the first motor 14 to the "wrong" electrical terminals 46. This can also be detected via image recognition (e.g. using a neural network). Thus, again, the identified state of the electrical connection is different from the expected state. Then the assistant system 38 modifies the machine application running in the PLC 32 such that electrical signal descant for the first motor 14 are outputted at the electrical terminals 46 at which the first motor 14 is actually connected.

Thereby, the assistant system 38 can rectify deviations during the building process of the industrial machine 10 thus ensuring a reliable operation of the complete industrial machine 10. The modifications of the machine application can preferably be performed automatically, e.g. after prompting the worker 42 for authorization.

### List of reference numerals

- 10: industrial machine
- 11: work product
- 12: first conveyor
- 14: first motor
- 16: feeder
- 18: linear motor
- 20: cutter
- 22: second motor
- 24: second conveyor
- 26: weight sensor
- 28a, 28b, 28c, 28d: first to fourth field device
- 30: electrical cable
- 31: cable channel
- 32: PLC
- 34: digital bus
- 36: power supply
- 38: assistant system
- 39: data connection
- 40: camera
- 42: worker
- 44: terminal panel
- 46: electrical terminal
- 48: identification plate

## Claims

1. A method for maintaining an industrial machine (10), the industrial machine (10) comprising a plurality of machine components (12, 14, 16, 18, 20, 22, 24, 26, 28, 30, 31, 32, 34, 36, 44, 46, 48), the industrial machine (10) being controlled by a machine application, wherein the method comprises:
a) identifying by a vision system (40) the states of the machine components (12, 14, 16, 18, 20, 22, 24, 26, 28, 30, 31, 32, 34, 36, 44, 46, 48),
b) performing by an assistant system (38) a discovery process over a data network (34) comprising an Ethernet connection and/or a field bus connection to detect machine components (12, 14, 16, 18, 20, 22, 24, 26, 28, 30, 31, 32, 34, 36, 44, 46, 48), during the discovery process a readout of information about the machine components is performed to identify the states of hidden machine components (12, 14, 16, 18, 20, 22, 24, 26, 28, 30, 31, 32, 34, 36, 44, 46, 48) that cannot be discovered by the vision system (40),
c) comparing by the assistant system (38) the identified states to expected states of the machine components (12, 14, 16, 18, 20, 22, 24, 26, 28, 30, 31, 32, 34, 36, 44, 46, 48),
d) in case a deviation of the identified state from the expected state of at least one machine component (12, 14, 16, 18, 20, 22, 24, 26, 28, 30, 31, 32, 34, 36, 44, 46, 48) is detected then modifying the machine application by the assistant system (38), preferably automatically, based on the deviating identified state.

2. The method of claim 1, wherein
the assistant system (38) is connected to at least one controller (32) of the industrial machine (10) via a data connection (39), wherein the controller (32) executes at least a part of the machine application.

3. The method of claim 1 or 2, wherein
the vision system comprises at least one camera (40), wherein the camera (40) repeatedly provides images of the industrial machine (10) to the assistant system (38).

4. The method of claim 3, wherein
at least one camera (40) is movable relative to the industrial machine (10), wherein the movable camera (40) is preferably carried by a worker (42).

5. The method of at least one of the previous claims, wherein
the vision system (40) employs an artificial intelligence, preferably a neural network, to detect the states of the machine components (12, 14, 16, 18, 20, 22, 24, 26, 28, 30, 31, 32, 34, 36, 44, 46, 48).

6. The method of at least one of the previous claims, wherein
the identified state of a respective machine component (12, 14, 16, 18, 20, 22, 24, 26, 28, 30, 31, 32, 34, 36, 44, 46, 48) comprises at least one of a position of the machine component (12, 14, 16, 18, 20, 22, 24, 26, 28, 30, 31, 32, 34, 36, 44, 46, 48), a mechanical connection of the machine component (12, 14, 16, 18, 20, 22, 24, 26, 28, 30, 31, 32, 34, 36, 44, 46, 48), an electrical connection of the machine component (12, 14, 16, 18, 20, 22, 24, 26, 28, 30, 31, 32, 34, 36, 44, 46, 48), an orientation of the machine component (12, 14, 16, 18, 20, 22, 24, 26, 28, 30, 31, 32, 34, 36, 44, 46, 48), a type of the machine component (12, 14, 16, 18, 20, 22, 24, 26, 28, 30, 31, 32, 34, 36, 44, 46, 48), and a network address of the machine component (12, 14, 16, 18, 20, 22, 24, 26, 28, 30, 31, 32, 34, 36, 44, 46, 48).

7. The method of at least one of the previous claims, wherein
the worker (42) is prompted for approval before the machine application is modified.

8. The method of at least one of the previous claims, wherein
the expected states of the machine components (12, 14, 16, 18, 20, 22, 24, 26, 28, 30, 31, 32, 34, 36, 44, 46, 48) are retrieved from an electronic plan of the industrial machine (10), preferably from a CAD-file and/or a file containing information about the planned electrical connections within the industrial machine (10).

9. The method of at least one of the previous claims, wherein
modification of the machine application comprises re-mapping of a network address of the respective machine component (12, 14, 16, 18, 20, 22, 24, 26, 28, 30, 31, 32, 34, 36, 44, 46, 48) and/or re-mapping of an electrical interface to which the respective machine component (12, 14, 16, 18, 20, 22, 24, 26, 28, 30, 31, 32, 34, 36, 44, 46, 48) is connected.

10. The method of at least one of the previous claims, wherein
a virtual plan of the industrial machine (10) is generated based on the identified states of the machine components (12, 14, 16, 18, 20, 22, 24, 26, 28, 30, 31, 32, 34, 36, 44, 46, 48), wherein the virtual plan is preferably updated when a new state of a machine component (12, 14, 16, 18, 20, 22, 24, 26, 28, 30, 31, 32, 34, 36, 44, 46, 48) is identified.

11. The method of at least one of the previous claims, wherein
an augmented reality module is used to show the worker (42) where a respective machine component (12, 14, 16, 18, 20, 22, 24, 26, 28, 30, 31, 32, 34, 36, 44, 46, 48) is placed, should be placed and/or should be connected.

12. An assistant system (38), having a computing unit, wherein the assistant system (38) is adapted to be connected and/or to be at least partially included into an industrial machine (10), wherein the assistant system (38) comprises a vision system (40) that is adapted to identify the states of machine components (12, 14, 16, 18, 20, 22, 24, 26, 28, 30, 31, 32, 34, 36, 44, 46, 48) of the industrial machine (10), the assistant system (38) being further adapted to compare the identified states to expected states of the machine components (12, 14, 16, 18, 20, 22, 24, 26, 28, 30, 31, 32, 34, 36, 44, 46, 48), wherein, in case of a deviation of the identified state from the expected state of at least one of the machine components (12, 14, 16, 18, 20, 22, 24, 26, 28, 30, 31, 32, 34, 36, 44, 46, 48), the assistant system (38) is configured to modify a machine application, which controls the industrial machine (10), preferably automatically, based on the deviating identified state,
**characterized in that**
the assistant system (38) is configured to perform a discovery process over a data network (34) to detect machine components (12, 14, 16, 18, 20, 22, 24, 26, 28, 30, 31, 32, 34, 36, 44, 46, 48) and to identify the states of hidden machine components (12, 14, 16, 18, 20, 22, 24, 26, 28, 30, 31, 32, 34, 36, 44, 46, 48) that cannot be discovered by the vision system (40), wherein the data network (34) comprises an Ethernet connection and/or a field bus connection.

13. A system comprising an assistant system (38) as claimed in claim 12 and an industrial machine (10), wherein the industrial machine (10) and the assistant system (38) are coupled via a data connection (39).

## Patentansprüche

1. Verfahren zur Wartung einer Industriemaschine (10), wobei die Industriemaschine (10) eine Vielzahl von Maschinenkomponenten (12, 14, 16, 18, 20, 22, 24, 26, 28, 30, 31, 32, 34, 36, 44, 46, 48) umfasst und die Industriemaschine (10) durch eine Maschinenanwendung gesteuert wird, wobei das Verfahren umfasst:
a) Identifizieren der Zustände der Maschinenkomponenten (12, 14, 16, 18, 20, 22, 24, 26, 28, 30, 31, 32, 34, 36, 44, 46, 48) durch ein Bildverarbeitungssystem (40),
b) Durchführen eines Erkennungsprozesses durch ein Assistenzsystem (38) über ein Datennetzwerk (34), das eine Ethernet-Verbindung und/oder eine Feldbusverbindung umfasst, um Maschinenkomponenten (12, 14, 16, 18, 20, 22, 24, 26, 28, 30, 31, 32, 34, 36, 44, 46, 48) zu detektieren, wobei während des Erkennungsprozesses ein Auslesen von Informationen über die Maschinenkomponenten durchgeführt wird, um die Zustände von verborgenen Maschinenkomponenten (12, 14, 16, 18, 20, 22, 24, 26, 28, 30, 31, 32, 34, 36, 44, 46, 48) zu identifizieren, die nicht durch das Bildverarbeitungssystem (40) erkannt werden können,
c) Vergleichen der identifizierten Zustände mit erwarteten Zuständen der Maschinenkomponenten (12, 14, 16, 18, 20, 22, 24, 26, 28, 30, 31, 32, 34, 36, 44, 46, 48) durch das Assistenzsystem (38),
d) falls eine Abweichung des identifizierten Zustands von dem erwarteten Zustand mindestens einer Maschinenkomponente (12, 14, 16, 18, 20, 22, 24, 26, 28, 30, 31, 32, 34, 36, 44, 46, 48) detektiert wird, dann Modifizieren der Maschinenanwendung durch das Assistenzsystem (38), vorzugsweise automatisch, basierend auf dem abweichenden identifizierten Zustand.

2. Verfahren nach Anspruch 1, wobei
das Assistenzsystem (38) über eine Datenverbindung (39) mit mindestens einer Steuerung (32) der Industriemaschine (10) verbunden ist, wobei die Steuerung (32) zumindest einen Teil der Maschinenanwendung ausführt.

3. Verfahren nach Anspruch 1 oder 2, wobei
das Bildverarbeitungssystem mindestens eine Kamera (40) umfasst, wobei die Kamera (40) wiederholt Bilder der Industriemaschine (10) an das Assistenzsystem (38) liefert.

4. Verfahren nach Anspruch 3, wobei
mindestens eine Kamera (40) relativ zu der Industriemaschine (10) bewegbar ist, wobei die bewegbare Kamera (40) vorzugsweise von einem Arbeiter (42) getragen wird.

5. Verfahren nach mindestens einem der vorhergehenden Ansprüche, wobei das Bildverarbeitungssystem (40) eine künstliche Intelligenz verwendet, vorzugsweise ein neuronales Netz, um die Zustände der Maschinenkomponenten (12, 14, 16, 18, 20, 22, 24, 26, 28, 30, 31, 32, 34, 36, 44, 46, 48) zu detektieren.

6. Verfahren nach mindestens einem der vorhergehenden Ansprüche, wobei der identifizierte Zustand einer jeweiligen Maschinenkomponente (12, 14, 16, 18, 20, 22, 24, 26, 28, 30, 31, 32, 34, 36, 44, 46, 48) eine Position der Maschinenkomponente (12, 14, 16, 18, 20, 22, 24, 26, 28, 30, 31, 32, 34, 36, 44, 46, 48) und/oder eine mechanische Verbindung der Maschinenkomponente (12, 14, 16, 18, 20, 22, 24, 26, 28, 30, 31, 32, 34, 36, 44, 46, 48) und/oder eine elektrische Verbindung der Maschinenkomponente (12, 14, 16, 18, 20, 22, 24, 26, 28, 30, 31, 32, 34, 36, 44, 46, 48) und/oder eine Ausrichtung der Maschinenkomponente (12, 14, 16, 18, 20, 22, 24, 26, 28, 30, 31, 32, 34, 36, 44, 46, 48) und/oder einen Typ der Maschinenkomponente (12, 14, 16, 18, 20, 22, 24, 26, 28, 30, 31, 32, 34, 36, 44, 46, 48) und/oder eine Netzwerkadresse der Maschinenkomponente (12, 14, 16, 18, 20, 22, 24, 26, 28, 30, 31, 32, 34, 36, 44, 46, 48) umfasst.

7. Verfahren nach mindestens einem der vorhergehenden Ansprüche, wobei der Arbeiter (42) vor einer Modifikation der Maschinenanwendung um seine Zustimmung gebeten wird.

8. Verfahren nach mindestens einem der vorhergehenden Ansprüche, wobei die erwarteten Zustände der Maschinenkomponenten (12, 14, 16, 18, 20, 22, 24, 26, 28, 30, 31, 32, 34, 36, 44, 46, 48) aus einem elektronischen Plan der Industriemaschine (10), vorzugsweise aus einer CAD-Datei und/oder einer Datei mit Informationen über die geplanten elektrischen Verbindungen innerhalb der Industriemaschine (10), abgerufen werden.

9. Verfahren nach mindestens einem der vorhergehenden Ansprüche, wobei eine Modifikation der Maschinenanwendung eine Neuzuordnung einer Netzwerkadresse der jeweiligen Maschinenkomponente (12, 14, 16, 18, 20, 22, 24, 26, 28, 30, 31, 32, 34, 36, 44, 46, 48) und/oder eine Neuzuordnung einer elektrischen Schnittstelle umfasst, mit der die jeweilige Maschinenkomponente (12, 14, 16, 18, 20, 22, 24, 26, 28, 30, 31, 32, 34, 36, 44, 46, 48) verbunden ist.

10. Verfahren nach mindestens einem der vorhergehenden Ansprüche, wobei ein virtueller Plan der Industriemaschine (10) basierend auf den identifizierten Zuständen der Maschinenkomponenten (12, 14, 16, 18, 20, 22, 24, 26, 28, 30, 31, 32, 34, 36, 44, 46, 48) erzeugt wird, wobei der virtuelle Plan vorzugsweise aktualisiert wird, wenn ein neuer Zustand einer Maschinenkomponente (12, 14, 16, 18, 20, 22, 24, 26, 28, 30, 31, 32, 34, 36, 44, 46, 48) identifiziert wird.

11. Verfahren nach mindestens einem der vorhergehenden Ansprüche, wobei ein Augmented-Reality-Modul verwendet wird, um dem Arbeiter (42) zu zeigen, wo eine jeweilige Maschinenkomponente (12, 14, 16, 18, 20, 22, 24, 26, 28, 30, 31, 32, 34, 36, 44, 46, 48) platziert ist, platziert werden soll und/oder angeschlossen werden soll.

12. Assistenzsystem (38) mit einer Recheneinheit, wobei das Assistenzsystem (38) geeignet ist, um mit einer Industriemaschine (10) verbunden und/oder zumindest teilweise in diese einbezogen zu werden, wobei das Assistenzsystem (38) ein Bildverarbeitungssystem (40) umfasst, das geeignet ist, um die Zustände von Maschinenkomponenten (12, 14, 16, 18, 20, 22, 24, 26, 28, 30, 31, 32, 34, 36, 44, 46, 48) der Industriemaschine (10) zu identifizieren, wobei das Assistenzsystem (38) ferner geeignet ist, um die identifizierten Zustände mit erwarteten Zuständen der Maschinenkomponenten (12, 14, 16, 18, 20, 22, 24, 26, 28, 30, 31, 32, 34, 36, 44, 46, 48) zu vergleichen, wobei das Assistenzsystem (38) konfiguriert ist, um im Fall einer Abweichung des identifizierten Zustands von dem erwarteten Zustand mindestens einer der Maschinenkomponenten (12, 14, 16, 18, 20, 22, 24, 26, 28, 30, 31, 32, 34, 36, 44, 46, 48) eine Maschinenanwendung, die die Industriemaschine (10) steuert, basierend auf dem abweichenden identifizierten Zustand vorzugsweise automatisch zu modifizieren,
**dadurch gekennzeichnet, dass**
das Assistenzsystem (38) konfiguriert ist, um einen Erkennungsprozess über ein Datennetzwerk (34) durchzuführen, um Maschinenkomponenten (12, 14, 16, 18, 20, 22, 24, 26, 28, 30, 31, 32, 34, 36, 44, 46, 48) zu detektieren und die Zustände von verborgenen Maschinenkomponenten (12, 14, 16, 18, 20, 22, 24, 26, 28, 30, 31, 32, 34, 36, 44, 46, 48) zu identifizieren, die nicht durch das Bildverarbeitungssystem (40) erkannt werden können, wobei das Datennetzwerk (34) eine Ethernet-Verbindung und/oder eine Feldbusverbindung umfasst.

13. System mit einem Assistenzsystem (38) nach Anspruch 12 und mit einer Industriemaschine (10), wobei die Industriemaschine (10) und das Assistenzsystem (38) über eine Datenverbindung (39) gekoppelt sind.

## Revendications

1. Procédé de maintenance d'une machine industrielle (10), la machine industrielle (10) comprenant une pluralité de composants de machine (12, 14, 16, 18, 20, 22, 24, 26, 28, 30, 31, 32, 34, 36, 44, 46, 48), la machine industrielle (10) étant commandée par une application de machine, dans lequel le procédé comprend les étapes consistant à :
a) identifier, via un système de vision (40), les états des composants de machine (12, 14, 16, 18, 20, 22, 24, 26, 28, 30, 31, 32, 34, 36, 44, 46, 48),
b) effectuer, via un système d'assistance (38), un processus de découverte sur un réseau de données (34) comprenant une connexion Ethernet et/ou un connexion de bus de terrain pour détecter des composants de machine (12, 14, 16, 18, 20, 22, 24, 26, 28, 30, 31, 32, 34, 36, 44, 46, 48), pendant le processus de découverte, une lecture d'informations concernant les composants de machine étant effectuée pour identifier les états de composants de machine cachés (12, 14, 16, 18, 20, 22, 24, 26, 28, 30, 31, 32, 34, 36, 44, 46, 48) qui ne peuvent pas être découverts par le système de vision (40),
c) comparer, via le système d'assistance (38), les états identifiés à des états escomptés des composants de machine (12, 14, 16, 18, 20, 22, 24, 26, 28, 30, 31, 32, 34, 36, 44, 46, 48),
d) dans un cas où une déviation de l'état identifié par rapport à l'état escompté de l'un au moins des composants de machine (12, 14, 16, 18, 20, 22, 24, 26, 28, 30, 31, 32, 34, 36, 44, 46, 48) est détectée, modifier ensuite l'application de machine via le système d'assistance (38), de préférence automatiquement, sur la base de l'état identifié déviant.

2. Procédé selon la revendication 1, dans lequel
le système d'assistance (38) est connecté à au moins un contrôleur (32) de la machine industrielle (10) via une connexion de données (39), dans lequel le contrôleur (32) exécute au moins une partie de l'application de machine.

3. Procédé selon la revendication 1 ou 2, dans lequel
le système de vision comprend au moins une caméra (40), dans lequel la caméra (40) fournit de manière répétée des images de la machine industrielle (10) au système d'assistance (38).

4. Procédé selon la revendication 3, dans lequel
au moins une caméra (40) peut être déplacée par rapport à la machine industrielle (10), dans lequel la caméra (40) déplaçable est de préférence, portée par un travailleur (42).

5. Procédé selon l'une des revendications précédentes, dans lequel le système de vision (40) emploie une intelligence artificielle, de préférence un réseau de neurones, pour détecter les états des composants de machine (12, 14, 16, 18, 20, 22, 24, 26, 28, 30, 31, 32, 34, 36, 44, 46, 48).

6. Procédé selon l'une des revendications précédentes, dans lequel les états identifiés d'un composant de machine respectif (12, 14, 16, 18, 20, 22, 24, 26, 28, 30, 31, 32, 34, 36, 44, 46, 48) comprend au moins un élément parmi une position du composant de machine (12, 14, 16, 18, 20, 22, 24, 26, 28, 30, 31, 32, 34, 36, 44, 46, 48), une connexion mécanique du composant de machine (12, 14, 16, 18, 20, 22, 24, 26, 28, 30, 31, 32, 34, 36, 44, 46, 48), une connexion électrique du composant de machine (12, 14, 16, 18, 20, 22, 24, 26, 28, 30, 31, 32, 34, 36, 44, 46, 48), une orientation du composant de machine (12, 14, 16, 18, 20, 22, 24, 26, 28, 30, 31, 32, 34, 36, 44, 46, 48), un type du composant de machine (12, 14, 16, 18, 20, 22, 24, 26, 28, 30, 31, 32, 34, 36, 44, 46, 48), et une adresse réseau du composant de machine (12, 14, 16, 18, 20, 22, 24, 26, 28, 30, 31, 32, 34, 36, 44, 46, 48).

7. Procédé selon l'une au moins des revendications précédentes, dans lequel
le travailleur (42) est invité à donner son accord avant que l'application de machine soit modifiée.

8. Procédé selon l'une au moins des revendications précédentes, dans lequel
les états escomptés des composants de machine (12, 14, 16, 18, 20, 22, 24, 26, 28, 30, 31, 32, 34, 36, 44, 46, 48) sont récupérés à partir d'un plan électronique de la machine industrielle (10), de préférence à partir d'un fichier CAO et/ou d'un fichier contenant des informations concernant les connexions électriques planifiées à l'intérieur de la machine industrielle (10).

9. Procédé selon l'une au moins des revendications précédentes, dans lequel
une modification de l'application de machine comprend un re-mappage d'un adresse de réseau du composant de machine (12, 14, 16, 18, 20, 22, 24, 26, 28, 30, 31, 32, 34, 36, 44, 46, 48) respectif et/ou un re-mappage d'une interface électrique à laquelle le composant de machine (12, 14, 16, 18, 20, 22, 24, 26, 28, 30, 31, 32, 34, 36, 44, 46, 48) respectif est connecté.

10. Procédé selon l'une au moins des revendications précédentes, dans lequel
un plan virtuel de la machine industrielle (10) est généré sur la base d'états identifiés des composants de machine (12, 14, 16, 18, 20, 22, 24, 26, 28, 30, 31, 32, 34, 36, 44, 46, 48), dans lequel le plan virtuel est de préférence mis à jour quand un nouvel état du composant de machine (12, 14, 16, 18, 20, 22, 24, 26, 28, 30, 31, 32, 34, 36, 44, 46, 48) est identifié.

11. Procédé selon l'une au moins des revendications précédentes, dans lequel
une module de réalité augmentée est utilisé pour montrer au travailler (42) où un composant de machine (12, 14, 16, 18, 20, 22, 24, 26, 28, 30, 31, 32, 34, 36, 44, 46, 48) respectif est placé, devrait être placé et/ou devrait être connecté.

12. Système d'assistance (38), ayant une unité de calcul, dans lequel le système d'assistance (38) est adapté pour être connecté et/ou être au moins partiellement inclus dans une machine industrielle (10), dans lequel le système d'assistance (38) comprend un système de vision (40) qui est adapté pour identifier les états de composants de machine (12, 14, 16, 18, 20, 22, 24, 26, 28, 30, 31, 32, 34, 36, 44, 46, 48) de la machine industrielle (10), le système d'assistance (38) étant en outre adapté pour comparer les états identifiés à des états escomptés des composants de machine (12, 14, 16, 18, 20, 22, 24, 26, 28, 30, 31, 32, 34, 36, 44, 46, 48), dans lequel, dans un cas où une déviation de l'état identifié par rapport à l'état escompté de l'un au moins des composants de machine (12, 14, 16, 18, 20, 22, 24, 26, 28, 30, 31, 32, 34, 36, 44, 46, 48) est détectée, le système d'assistance (38) est configuré pour modifier une application de machine, qui commande la machine industrielle (10), de préférence automatiquement, sur la base de l'état identifié déviant,
**caractérisé en ce que**
le système d'assistance (38) est configuré pour effectuer un processus de découverte sur un réseau de données (34) pour détecter des composants de machine (12, 14, 16, 18, 20, 22, 24, 26, 28, 30, 31, 32, 34, 36, 44, 46, 48) et pour identifier les états de composants de machine cachés (12, 14, 16, 18, 20, 22, 24, 26, 28, 30, 31, 32, 34, 36, 44, 46, 48) qui ne peuvent pas être découverts par le système de vision (40), dans lequel le réseau de données (34) comprend une connexion Ethernet et/ou un connexion de bus de terrain.

13. Système comprenant un système d'assistance (38) selon la revendication 12 et une machine industrielle (10), dans lequel la machine industrielle (10) et le système d'assistance (38) sont couplés via une connexion de données (39).
